Europäisches Patentamt

European Patent Office

Office européen des brevets

(11) Numéro de publication: **0 102 873**
**A1**

(12) **DEMANDE DE BREVET EUROPEEN**

(21) Numéro de dépôt: **83401549.7**

(22) Date de dépôt: **27.07.83**

(51) Int. Cl.³: **A 01 K 87/02**
**A 01 K 87/04**

(30) Priorité: **13.08.82 FR 8214360**

(43) Date de publication de la demande:
**14.03.84 Bulletin 84/11**

(84) Etats contractants désignés:
**AT BE CH DE FR GB IT LI LU NL SE**

(71) Demandeur: **Dassonville, Marcel**
**1182, route nationale**
**F-59194 Raches(FR)**

(72) Inventeur: **Dassonville, Marcel**
**1182, route nationale**
**F-59194 Raches(FR)**

(74) Mandataire: **Lemoine, Jean**
**Cabinet Lemoine Abreveta 12, boulevard de la Liberté**
**F-59800 Lille(FR)**

(54) **Perfectionnements aux cannes à pêche composées de plusieurs brins creux.**

(57) L'invention concerne des cannes à brins (1, 2) légèrement coniques de manière qu'ils puissent s'emboiter par un emmanchement déboitable.

Les cannes sont caractérisées par la combinaison:
a) d'un dispositif d'assemblage démontable des brins (1,2) par l'intermédiaire d'un embout ou douille (3, 31) creux biconique à conicité s'adaptant à celle des deux extrémités des brins (1, 2) assemblés, le plus grand diamètre extérieur du plus petit brin (2) supérieur étant inférieur au plus petit diamètre intérieur du brin inférieur (1).
b) d'une solution de continuité (25, 26) dans le brin inférieur (1), où est prévu le moulinet (22) avec sa sortie de fil susceptible de se mettre dans plusieurs axes parallèles à celui de la canne et, notamment, dans l'axe de celle-ci.

Fig.5

## Domaine technique

L'invention concerne des perfectionnements aux cannes à pêche composées de plusieurs brins creux susceptibles d'être assemblés, lesdits brins creux étant légèrement coniques de manière à pouvoir s'emboiter par un emmanchement déboitable, lesdites cannes présentant des anneaux de guidage du fil support de la ligne. Les différents brins de ces cannes peuvent être rendus télescopiques, le brin inférieur pouvant présenter, à son extrémité de plus faible diamètre, un alèsage conique se rétrécissant vers l'extrémité de plus gros diamètre du même brin, l'assemblage se faisant éventuellement avec l'adjonction d'anneaux guide-fil extérieurs. Généralement, lesdits brins ont des diamètres croissants depuis le scion jusqu'à la partie tenue par le pêcheur qui est le brin inférieur de base. Certains modèles de la canne objet de l'invention présentent un fil supportant les lignes, ledit fil passant à l'intérieur de la canne dans l'axe de celle-ci. Dans ce dernier cas, on prévoit des anneaux de guidage de ce fil à l'intérieur de la canne.

## Problème posé

Il s'agit de prévoir une canne télescopique à brins séparables, ou tout au moins dont on peut réduire la longueur suivant les possibilités de pêche, et de prévoir , aussi, les anneaux guide-fil nouveaux aussi bien à l'extérieur qu'à l'intérieur de ladite canne.

## Etat de la technique et inconvénients

Il existe, sur le marché, quatre sortes de cannes à pêche répondant plus ou moins aux critères ci-dessus, à savoir:
1° les cannes à éléments (brins) assemblés par virolage ; les éléments sont tubulaires en produit léger, généralement des fibres agglomérées par une matière synthétique, comportant, à l'extrémité de chaque élément, une virole d'assemblage à l'élément suivant ;

2° les cannes télescopiques ; elles sont aussi réalisées avec les mêmes matières qu'indiquées ci-dessus et constituent des éléments tubulaires s'emboîtant les uns dans les autres ;

3° les cannes à emboitement qui diffèrent des cannes à éléments assemblés par virolage seulement par le fait qu'il n'y a pas de virole et que le scion, ou chacun des brins, s'emboite dans l'élément inférieur par une portée à faible conicité inverse de la conicité de l'élément supérieur, c'est-à-dire de l'élément le plus rapproché du scion ;

4° les cannes téléréglables qui sont toujours conçues de la même manière par des éléments tubulaires légèrement coniques en fibres, mais dont la liaison de différents brins se fait ici par un système de serrage qui permet d'adapter la longueur choisie par un dispositif apparenté à celui qui existe sur certains pieds d'appareils photographiques.

Les cannes à éléments et les cannes à emboitement ont comme avantage sur les autres d'être plus légères, tout en restant relativement rigide, de faciliter la suppression ou l'addition d'un ou plusieurs éléments ou brins pendant l'opération de pêche, cependant elles ont l'inconvénient de l'encombrement et des délais de montage au début et de démontage en fin de partie de pêche.

Les cannes télescopiques se déplient et se replient facilement et rapidement mais la suppression d'un ou de plusieurs brins en action de pêche ne peut pas se faire.

Les cannes téléréglables ont été fabriquées pour pallier les inconvénients des précédentes. En fait, ce sont des

0102873

cannes télescopiques cylindriques dont on peut régler la longueur de déploiement. L'inconvénient est l'aspect inesthétique, leur poids et d'apporter une perturbation à l'équilibrage de l'ensemble de la canne qui, de plus, n'est pa allégée par des raccourcissements opérés.

Tous les inconvénients cités plus haut sont encore aggravés pour les cannes munies d'anneaux, même s'ils sont amovibles. Même pour les cannes dont on peut en action de pêche, supprimer un brin, on doit supprimer l'anneau correspondant et il faut démonter toute la ligne et faire passer le fil à l'extérieur de cet anneau.

Les cannes téléréglables présentent, à ce sujet, l'avantage de garder leur possibilité de réglage de leur longueur en action de pêche ; mais leurs problèmes de poids, d'esthétique, d'équilibre et de démontage n'en sont pas moins aggravés par la présence d'anneaux.

Plus précisément, on peut encore citer les documents suivants :

le brevet français 1 154 702 du 3/10/1967 prévoit un réglage de la longueur des tubes télescopiques coniques en les déployant plus ou moins, les brins non utilisés restant repliés dans le brin de base. Le résultat est obtenu en disposant, à l'extérieur de l'extrémité supérieure des brins, un collier qui va servir à leur calage dans le brin de base quand il s'agit de les y maintenir en position non déployée. Ce collier, à l'usage, doit être fixe ou déplaçable à frottements durs sur une courte distance. Quand le tube télescopique est déployé, les colliers des brins déployés n'ont aucun rôle dans l'assemblage des brins. Aucun de ceux-ci ne peut être déboîté complètement ou déployé partiellement. On a donc toujours un tube télescopique où tous les brins s'articulent directement entre eux et sont inséparables les uns des autres.

Le collier de ce brevet est une cale et non un embout. L'extrémité supérieure du brin qui reçoit ce collier quand ledit brin est replié n'est pas décrite comme étant creusée profondément d'une conicité femelle épousant exactement la conicité mâle ou externe, du collier. Si cela était, le tube, une fois déployé comporterait au dessus de chaque articulation des brins entre eux un baillement disgracieux et appelé à recevoir les eaux de pluies en action de pêche.

Le brevet français 1 292 983 décrit un dispositif comparable à celui du brevet français 1 554 702. Il est basé sur le même principe.

La différence entre les deux dispositifs se trouve dans la conception de la cale du bas. Celle-ci a la forme d'un manchon creux.

Dans les deux brevets analysés ci-dessus, on rencontre des tubes télescopiques composés de brins inséparables les uns des autres qui portent un collier fixé à l'extérieur de leur extrémité supérieure, collier qui ne sert à son brin que quand celui-ci est replié dans le ou les brins de base.

La présente invention est destinée à remédier à ces inconvénients.

## Exposé de l'invention

Les cannes à pêche de l'invention sont caractérisées principalement par la combinaison :

a) d'un dispositif d'assemblage démontable des brins par l'intermédiaire d'un embout ou douille creux biconique à conicités s'adaptant à celles des deux extrémités des brins à assembler, le plus grand diamètre extérieur du plus petit brin supérieur étant inférieur au plus petit diamètre intérieur du brin inférieur,

b) d'une solution de continuité dans le brin inférieur, où est prévu le moulinet avec sa sortie de fil susceptible de se mettre dans plusieurs axes parallèles à celui de la canne et, notamment, dans l'axe de celle-ci.

Suivant une première forme de réalisation, le brin inférieur présente à son extrémité de plus faible diamètre, un alésage conique se rétrécissant vers l'extrémité du plus gros diamètre du même brin, et on prévoit un embout ou douille creux, à conicités interne et externe en sens inverses, la conicité externe dudit embout correspondant à la conicité interne de l'extrémité de plus faible diamètre du brin inférieur, la conicité interne dudit embout correpondant à la conicité externe de l'extrémité la plus grosse du brin supérieur, l'ensemble étant conçu pour pouvoir éliminer, à la demande, un ou plusieurs brins inférieurs.

Suivant une autre forme de réalisation, l'embout ou douille creux coiffe l'extérieur des deux extrémités des brins, l'ensemble étant conçu pour pouvoir éliminer, à la demande, un ou plusieurs brin inférieurs.

Une autre caractéristique de l'invention, dans le cas d'un embout ou douille creux se coinçant entre l'extérieur du brin de petit diamètre et l'intérieur du brin de gros diamètre, réside dans le fait que l'on ménage dans l'embout une mortaise destinée à recevoir la patte d'un anneau guide-fil amovible, patte qui se coince entre "cuir et chair", entre l'embout et l'un des brins, la profondeur de la mortaise étant légèrement inférieure à l'épaisseur de la patte, pour assurer le serrage de celle-ci.

Souvent, on peut prévoir des anneaux "ouverts", c'est-à-dire des anneaux constitués par un fil rigide dont les deux extrémités libres constituent la patte tandis que la partie médiane est enroulée hélicoïdalement suivant une boucle, puis est recourbée dans un plan oblique à la patte.

Une caractéristique importante de l'invention, caractéristique qui peut d'ailleurs être appliquée dans tous les cas où on utilise une canne creuse conique, réside dans l'application, à l'intérieur de chaque brin conique, d'une série d'anneaux mobiles mais inutilisables avec un guide-fil central, le diamètre de chacun des anneaux étant légèrement différent de manière qu'ils puissent se placer librement, de façon régulièrement espacés, le long de chaque brin, le pourtour de chaque anneau ayant la forme d'un tronc de cône de hauteur suffisante pour que son axe reste sensiblement parallèle à l'axe du brin, empêchant ainsi son pincement.

L'invention présente encore la particularité de présenter un brin inférieur rompu, les deux parties rompues étant réliées par une pièce en forme de U au milieu de laquelle se place le moulinet. Cette pièce en forme de U peut d'ailleurs être pratiquement aplatie pour ne présenter que le minimum de saillie en dehors de l'encombrement extérieur de la canne. Dans cet esprit, on préfère monter le moulinet sur un support qui permet son escamotage hors de l'axe de la canne. Cette dernière disposition est d'ailleurs nécessaire pour permettre de rentrer tous les brins les uns dans les autres et plus spécialement dans le plus gros brin, c'est-à-dire le brin inférieur qui comporte ledit moulinet.

On peut prévoir un support de moulinet qui pivote autour d'un axe parallèle à la canne, par exemple, sur la partie centrale de la pièce en U, ou encore un support de moulinet qui pivote autour d'un axe perpendiculaire à l'axe de la canne.

### Solution au problème, avantages et résultats industriels

La canne de l'invention permet d'adapter facilement sa longueur au besoin nécessité par chaque situation. L'opération se fait rapidement sans être obligé de démonter complètement la canne. Elle se fait aussi facilement lorsque l'on utilise des anneaux externes puisqu'on peut retirer facilement l'anneau correspondant et même l'éliminer en laissant le fil de la ligne en place quand on utilise un anneau ouvert. L'opération inverse (addition d'un brin et adaptation d'un anneau supplémentaire) se fait aussi aisément.

Or, le prix de fabrication de la canne est pratiquement identique à celui d'une canne à emboitement. Il est opéré seulement dans la réalisation du mortaisage pour fixer la patte de l'anneau.

La canne de l'invention se plie et se replie comme une canne télescopique et se monte et se démonte comme une canne à emmanchement en permettant de poser ou de déposer des anneaux au cours de l'opération. Lors de l'utilisation des anneaux intérieurs de l'invention, il est possible de saisir séparément chaque brin au moment du dépliement de la canne pour manoeuvrer ledit brin de façon à bien répartir les anneaux mobiles à l'intérieur de leur brin, et ce, sans devoir retirer le fil de la ligne.

Elle offre un aspect esthétique et des facilités de démontage et de légèreté que n'a pas la canne téléréglable.

L'invention sera mieux comprise à l'aide de la description ci-après qui en donne un exemple non limitatif de réalisation pratique et qui est illustré par les dessins joints.

**Brève description des figures**

Dans ces dessins,

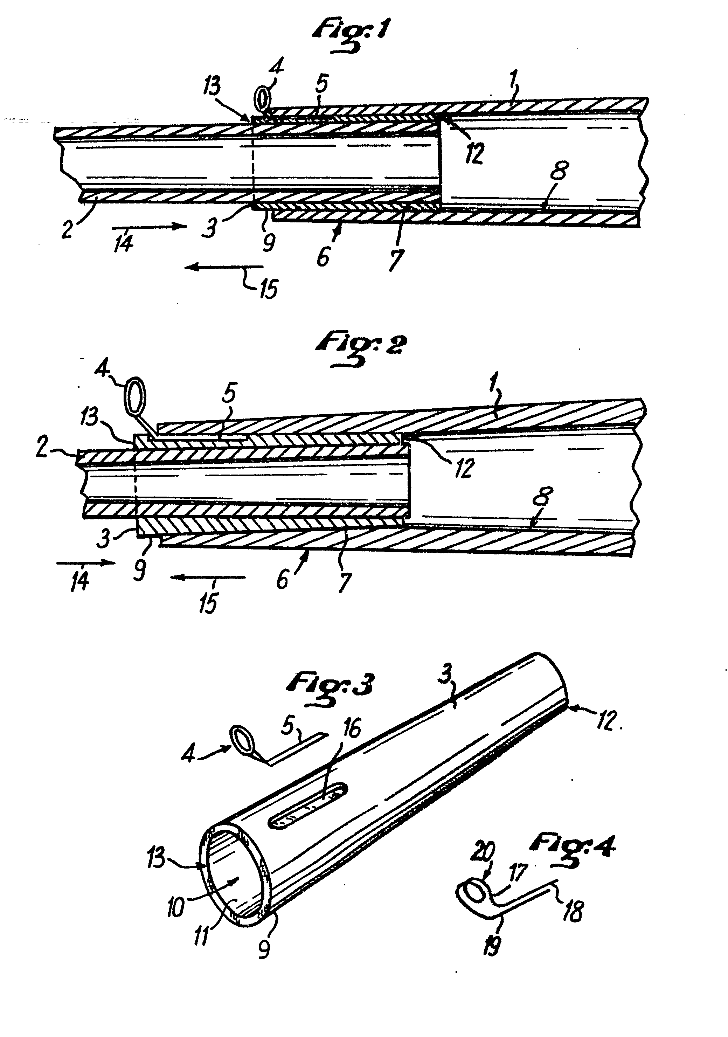

La figure 1 est une coupe longitudinale axiale d'une canne à la jonction de deux brins avec l'embout ou la douille de l'invention.

La figure 2 est une coupe schématique similaire à celle de la figure 1 où on a exagéré les épaisseurs des brins et les conicités des éléments pour mieux faire comprendre l'adaptation de l'embout ou douille avec chaque extrémité des deux brins assemblés ainsi que l'adaptation de la patte de l'anneau dans sa mortaise.

La figure 3 est une vue en perspective d'un embout seul orienté du côté de sa mortaise au dessus de laquelle on a représenté un anneau à patte.

La figure 4 est une vue en perspective d'un anneau ouvert adaptable à l'assemblage des brins suivant l'invention.

La figure 5 est une coupe longitudinale schématique représentant une canne à pêche de l'invention avec trois brins dont le plus petit brin est raccordé au brin médian par un embout ou douille creux coiffant l'extérieur des deux extrémités de brin tandis que le brin médian et le plus gros brin sont assemblés par un embout ou douille s'intercalant entre l'extérieur du brin médian et l'intérieur du plus gros brin.

La figure 6 est une coupe longitudinale d'un brin,

représenté de façon schématique avec une conicité exagérée pour montrer comment se placent les anneaux mobiles à l'intérieur dudit brin.

La figure 7 est une coupe longitudinale schématique du brin représenté à la figure 6, avec une conicité exagérée, montrant comment se rangent les anneaux intérieurs lorsqu'on veut replier la canne.

La figure 8 est une coupe longitudinale schématique de la canne représentée à la figure 5, mais dans sa position repliée.

La figure 9 est une vue du brin inférieur des deux cannes avec un moulinet situé à l'extrémité d'un support oscillant dans la position de la canne déployée avec le moulinet ayant sa sortie dans l'axe de la canne.

La figure 10 est une vue du même brin que celui représenté à la figure 9, mais dans la position de la canne repliée avec le support de moulinet qui a pivoté autour de son axe perpendiculaire.

La figure 11 est une vue en coupe détaillée d'un assemblage de deux brins par un embout ou douille creux qui coiffe l'extérieur des deux extrémités des brins.

**Description de quelques modes de réalisation**

Le dispositif de l'invention sert à assembler un brin inférieur (1, 101) à un brin supérieur (2) par emmanchement en y interposant un embout ou douille (3, 31) qui soit coince la patte (5) d'un anneau (4), soit coiffe les extrémités des deux brins (1, 2) (Figure 11).

D'une manière générale et connue, les brins inférieurs (1) et supérieurs (2) sont tubulaires et légèrement coniques. Depuis plusieurs années, on a trouvé intéressant de les fabriquer en fibres de verre noyées dans une résine synthétique. Tout récemment, on a même réalisé des matériaux composites plus résistants à base de fibres de carbone pour obtenir des brins (1) et (2) ayant de meilleures qualités mécaniques.

Dans le cas d'un embout (3), l'extrémité supérieure (6) du brin inférieur (1) présente une paroi interne (7) qui a une conicité inverse de la conicité de la paroi interne (8) qui court le long du brin inférieur (1). La conicité de la paroi interne (7), à l'extrémité du brin (1), permet l'emmanchement de l'embout (3) et empêche son enfoncement trop important à l'intérieur du brin (1). En fait, quand on enfonce l'embout ou douille (3), il subsiste toujours une partie apparente (9) à l'extrémité du brin (1) et il est impossible d'enfoncer complètement l'embout ou douille (3) dans le brin (1) sans détériorer celui-ci.

Par ailleurs, la paroi interne (10) de l'embout ou douille (3) présente une conicité inverse de sa paroi externe ; cette conicité a la même valeur que celle du brin supérieur (2) et les dimensions du trou interne (11) de l'embout ou douille (3) qui correspond à la conicité de l'extrémité inférieure du brin supérieur (2) correspondent aussi aux mêmes dimensions du gros bout de ce brin (2).

Par conséquent, on ne peut introduire l'embout ou douille (3) sur le brin supérieur (2) qu'en glissant l'extrémité supérieure amincie du brin supérieur (2) dans le trou (11) et en amenant l'embout (3) à l'extrémité inférieure du brin supérieur (2), là où ledit embout ou douille (3) viendra se coincer à cause des conicités du brin supérieur (2) et du trou (11).

On comprend que la paroi de l'embout ou douille (3) est très mince à son extrémité (12) qui s'enfonce dans le brin inférieur (1) et que, par contre, elle est beaucoup plus épaisse à son extrémité (13) qui reste à l'extérieur du brin inférieur (1). Cela est dû aux deux conicités inverses de l'alésage intérieur ou trou (11) de l'embout ou douille (3) et du périmètre extérieur de celui-ci.

On comprend que lorsqu'on enfonce le brin supérieur (2) dans le sens de la flèche (14), la paroi externe dudit brin (2) se décolle de la paroi interne (10) de l'embout (3) et le brin (2) peut pénétrer à l'intérieur du brin (1). On peut faire échapper le brin (2) par l'autre extrémité du brin (1). Cependant, on peut aussi séparer le brin (2) du brin (1) en déboitant l'embout ou douille (3) de la paroi interne (7) du brin inférieur (1) en le tirant dans le sens de la flèche (15). Ceci est facilité par la conicité externe de l'embout ou douille (3) et la conicité correspondante de la paroi interne (7) du brin (1).

La canne à pêche de l'invention est constituée d'autres brins non représentés, et qui s'assemblent de la même façon qui vient d'être expliquée par interposition d'un embout ou douille (3). Lorsque l'on veut utiliser une canne à pêche dans sa plus grande longueur, on utilise tous les brins et tous les embouts disponibles. Si on veut utiliser la canne la plus courte, on peut facilement déboiter un ou plusieurs brins parmi les plus gros en le déboitant de l'embout ou douille (3) correspondant.

Une autre particularité de l'invention réside dans la combinaison à l'assemblage qui vient d'être décrit, d'un anneau monopatte (5) que l'on prévoit de coincer entre "cuir et chair" entre l'extrémité du brin inférieur (1) et le bord le plus épais de l'embout ou douille (3). On prévoit dans l'épaisseur de l'embout ou douille (3) une mortaise (16) destinée à recevoir la patte (5) de l'anneau (4). On peut d'ailleurs prévoir plusieurs mortaises différentes suivant les épaisseurs différentes des pattes (5). A la limite, si la patte (5) a très peu d'épaisseur, on peut la coincer tout simplement entre l'embout (3) et l'extrémité du brin (1).

Une autre caractéristique de l'invention réside dans l'usage d'anneaux ouverts (17) constitués par un fil rigide dont les deux extrémités libres (18, 19) constituent la patte, similaire à la patte (5) tandis que la partie médiane du fil est enroulée suivant une boucle et demie, c'est-à-dire une spire et demie hélicoïdale pour avoir une forme ressemblante de l'anneau (4). On redresse la boucle (20) par rapport aux extrémités (18) et (19) de façon à ce que l'anneau ou plutot la boucle (20) se place dans un plan oblique par rapport à la patte (5) ou par rapport l'axe de la canne.

Lorsqu'on utilise la canne avec une ligne supportée par des anneaux (4) ou (17), on peut facilement retirer les brins inférieurs de la canne et même retirer les anneaux si on a utilisé des anneaux comme des anneaux ouverts (17). Inversement, si on désire rallonger la canne, il suffit d'emmancher des gros brins à la partie inférieure à l'aide des embouts ou douilles (3) correspondant et utiliser des anneaux (4) ou (17), ces derniers anneaux permettant d'y glisser facilement le fil venant du moulinet. Il va sans dire que l'assemblage décrit s'adapte tout le long de la même canne y compris le scion. Il faut remarquer que, pratiquement, l'utilisation des anneaux ouverts (17) n'est utile que dans la

fixation des brins inférieurs de la canne c'est-à-dire les gros brins puisque avec la canne à anneaux on n'a pratiquement jamais à retirer les anneaux qui sont situés plus haut, c'est-à-dire du côté du scion.

Pour la fixation du moulinet (2) sur le brin tenu à la main, il suffit de disposer d'un jeu de paires de bagues (23, 24) porte-moulinet comme il en existe sur le marché. La paire de bagues (23, 24), de diamètre adapté au brin (1) correspondant, s'enfile par l'extrémité supérieure de celui-ci, séparée de son embout juste le temps de l'opération.

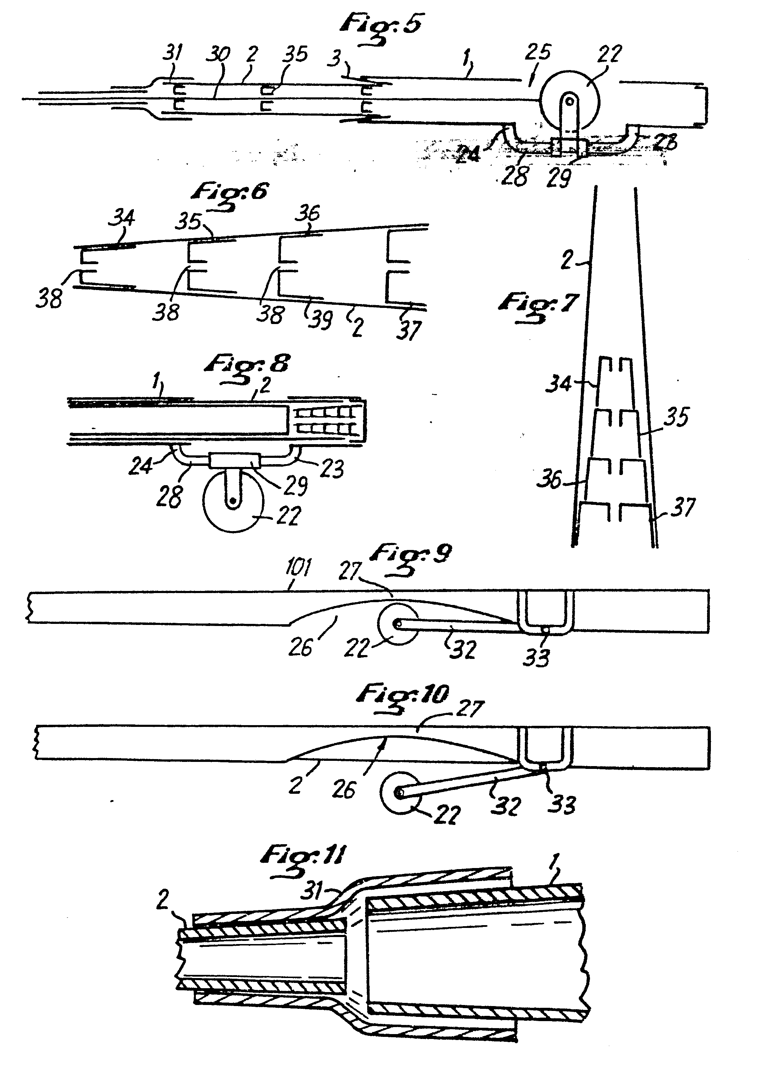

Dans le cas d'un embout (31) (figures 5 et 11) ce qui vient d'être expliqué est applicable.

Aux figures 5, 8, 9 et 10, on voit clairement la solution de continuité (25, 26) qui existe dans le brin inférieur (1). Les deux tronçons du brin inférieur sont reliés par une partie renforcée (27) du brin ou encore par une pièce en U (28) qui se termine par les deux bagues porte-moulinet (23, 24). Le moulinet (22) lui-même est fixé sur la pièce en U (28) par une douille (29) qui peut osciller sur la pièce (28) dans deux positions opposées de 180°, comme représenté aux figures 5 et 8. Dans la position de la figure 5, la canne étant déployée avec les différents brins tirés, le moulinet se trouve dans l'axe de la canne et le fil (30) peut passer à l'intérieur de ladite canne. Dans ce cas, il n'est évidemment plus question d'anneaux extérieurs (4).

Une autre variante est représentée aux figures (9) et (10) où le moulinet (22) est situé à l'extrémité d'un levier (32) qui oscille autour d'un axe (33) pour prendre les deux positions représentées aux figures 9 et 10, c'est-à-dire la position canne déployée, moulinet en action (figure 9) ou la position canne repliée et moulinet escamoté (figure 10).

Une caractéristique importante de l'invention réside dans le fait que l'on prévoit, à l'intérieur de chaque brin conique (1, 2), une série d'anneaux (34, 35, 36, 37) possédant chacun un guide-fil central (38). Le diamètre de chacun de ces anneaux (34) à (37) est légèrement différent de manière à ce que chacun d'eux puisse se placer librement de façon régulièrement espacée à l'intérieur de chaque brin. Le pourtour de chaque anneau présente une jupe tronconique (39) qui a une hauteur suffisante pour que l'anneau ne puisse pas osciller pour se désaxer par rapport à l'axe du brin (1) ou (2) et éviter qu'il se coince à l'intérieur de celui-ci. Le dernier anneau, tel que l'anneau (37), est fixé à demeure pour éviter que lui-même et les autres ne s'échappent du brin.

Avec ce dispositif, lorsque l'on incline le brin (1) ou (2) en mettant son bout de plus petit diamètre vers le bas et qu'on le tapotte sur le sol, les anneaux (34) à (37) se répartissent uniformément. A l'inverse, lorsque l'on replie la canne, les brins, en rentrant les uns dans les autres, repoussent les anneaux qui se détachent des parois et viennent s'empiler les uns sur les autres, comme il est représenté à la figure 7. Il en est de même dans chaque brin : on peut donc aisément replier la canne, même avec le fil en place.

0102873

## REVENDICATIONS

1. Perfectionnements aux cannes à pêche composées de plusieurs brins creux (1, 2) susceptibles d'être assemblés, lesdits brins (1, 2) étant légèrement coniques de manière à pouvoir s'emboiter par un emmanchement déboitable, lesdites cannes présentant des anneaux (4, 34, 35, 36, 37) de guidage du fil support de la ligne, c a r a c t é r i s é s par la combinaison :

a) d'un dispositif d'assemblage démontable des brins (1, 2) par l'intermédiaire d'un embout ou douille (3, 31) creux biconique à conicité s'adaptant à celle des deux extrémités des brins (1, 2) assemblés, le plus grand diamètre extérieur du plus petit brin (2) supérieur étant inférieur au plus petit diamètre intérieur du brin inférieur (1),

b) d'une solution de continuité (25, 26) dans le brin inférieur (1), où est prévu le moulinet (22) avec sa sortie de fil susceptible de.se mettre dans plusieurs axes parallèles à celui de la canne et, notamment, dans l'axe de celle-ci.

2. Canne à pêche, telle que définie dans la revendication 1, c a r a c t é r i s é e par le fait que le brin inférieur présente, à son extrémité de plus faible diamètre, un alésage conique se rétrécissant vers l'extrémité du plus gros diamètre du même brin, et par le fait qu'on prévoit un embout ou douille creux (3) à conicités interne et externe en sens inverses, la conicité extere dudit embout (3) correspondant à la conicité interne de l'extrémité du plus faible.diamètre (6) du brin inférieur (1) la conicité interne dudit embout (3) correspondant à la conicité externe de l'extrémité la plus grosse du brin supérieur (2), l'ensemble étant conçu pour pouvoir éliminer, à l  mande, un ou plusieurs

0102873

brins inférieurs.

3. Canne à pêche, telle que définie dans la revendication 1, c a r a c t é r i s é e par le fait que l'embout ou douille (31) creux coiffe l'extérieur des deux extrémités des brins (1, 2), l'ensemble étant conçu pour pouvoir éliminer, à la demande, un ou plusieurs brins inférieurs.

4. Canne à pêche, telle que définie dans la revendication 2, c a r a c t é r i s é e par le fait que dans l'embout, est ménagée une mortaise (16) (161) destinée à recevoir la patte (5) d'un anneau guide-fil amovible, patte qui se coince entre "cuir et chair" entre l'embout et l'un des brins, la profondeur de la mortaise étant légèrement inférieure à l'épaisseur de la patte (5) pour assurer le serrage de celle-ci.

5. Canne à pêche, telle que définie dans la revendication 4, c a r a c t é r i s é e par le fait qu'on prévoit des anneaux "ouverts" (20), c'est-à-dire des anneaux constitués par un fil rigide dont les extrémités libres (18, 19) constituent la patte tandis que la partie médiane où est enroulée hélicoïdalement suivant une boucle, puis est recourbée dans un plan oblique à la patte.

6. Canne à pêche, telle que définie dans l'une ou l'autre des revendications 2 ou 3, c a r a c t é r i s é e par le fait que l'on prévoit, à l'intérieur de chaque brin conique (1, 2), une série d'anneaux (34, 35, 36, 37) avec un guide-fil central (38), le diamètre de chacun des anneaux étant légèrement différent de manière qu'ils puissent se placer librement de façon régulièrement espacée le long de chaque brin (1, 2), le pourtour de chaque anneau ayant la forme d'un tronc de cône (39) de hauteur suffisante pour que son axe reste sensiblement parallèle à l'axe du brin (1, 2), empêchant ainsi son coincement à l'intérieur du brin, l'anneau (37) situé du côté de plus gros diamètre du brin étant fixé à demeure pour retenir les autres.

7. Canne à pêche, telle que définie dans l'une ou l'autre des revendications 1 à 6, c a r a c t é r i s é e par le fait que le brin inférieur de base (1) est rompu, les deux parties rompues étant reliées par une pièce en forme de U (28) au milieu de laquelle se place le moulinet (22).

8. Canne à pêche, telle que définie dans la revendication 7, c a r a c t é r i s é e par le fait que le moulinet (22) est monté sur un support (29, 32) qui permet son escamotage hors de l'axe de la canne.

9. Canne à pêche, telle que définie dans la revendication 8, c a r a c t é r i s é e par le fait que le support (29) du moulinet (22) pivote autour d'un axe parallèle à la canne, sur la partie centrale de la pièce en U.

10. Canne à pêche, telle que définie dans la revendication 8, c a r a c t é r i s é e par le fait que le support (32) du moulinet (22) pivote autour d'un axe (33) perpendiculaire à l'axe de la canne.

**Fig:1**

**Fig:2**

**Fig:3**

**Fig:4**

0102873

2/2

Fig.5

Fig.6

Fig.7

Fig.8

Fig.9

Fig.10

Fig.11

**RAPPORT DE RECHERCHE EUROPEENNE**

Office européen
des brevets

EP 83 40 1549

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| Y | FR-A-1 554 702 (MARGOU ET FILS) <br> * En entier * | 1,2 | A 01 K 87/02 <br> A 01 K 87/04 |
| Y | FR-A- 761 261 (CHUILLET) <br> * En entier * | 1,3 | |
| Y | FR-A- 942 132 (DUPONT) <br> * En entier * | 1,7,8 | |
| A | US-A-3 279 116 (CHAPMAN) <br> * En entier * | 1 | |
| A | US-A-4 277 906 (NELLI) <br> * En entier * | 4 | |
| A | FR-A-2 187 216 (LA CANNE A PECHE) <br> * Page 3, lignes 13-23; figures 1-5 * | 4,5 | **DOMAINES TECHNIQUES RECHERCHES (Int. Cl. ³)** <br><br> A 01 K |
| A | US-A-3 060 618 (GRISHKIN) <br> * En entier * | 5 | |
| A | FR-A-1 385 014 (GROSSENBACHER) <br> * En entier * | 6 | |
| A | FR-A-1 374 960 (PICARD) <br> * En entier * | 6 | |
| | --- -/- | | |

Le présent rapport de recherche a été établi pour toutes les revendications

| Lieu de la recherche <br> LA HAYE | Date d'achèvement de la recherche <br> 08-11-1983 | Examinateur <br> VERDOODT S.J.M. |
|---|---|---|

**0102873**

Office européen
des brevets

**RAPPORT DE RECHERCHE EUROPEENNE**

Numéro de la demande

EP 83 40 1549

| DOCUMENTS CONSIDERES COMME PERTINENTS | | | Page 2 |
|---|---|---|---|

| Catégorie | Citation du document avec indication, en cas de besoin, des parties pertinentes | Revendication concernée | CLASSEMENT DE LA DEMANDE (Int. Cl. 3) |
|---|---|---|---|
| A | FR-A-1 332 647 (GARBOLINO) <br> * En entier * <br><br> --- | 6 | |
| A | FR-A-1 565 620 (LABORATOIRE D'ETUDES ET DE RECHERCHES CHIMIQUES) <br><br> --- | | |
| A | FR-A-2 061 891 (VIGIER) <br><br> --- | | |
| A | FR-A-2 064 582 (VIGIER) <br><br> ----- | | |
| | | | DOMAINES TECHNIQUES RECHERCHES (Int. Cl. 3) |

Le présent rapport de recherche a été établi pour toutes les revendications

| Lieu de la recherche <br> LA HAYE | Date d'achèvement de la recherche <br> 08-11-1983 | Examinateur <br> VERDOODT S.J.M. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82